# EUROPEAN PATENT APPLICATION

(11) **EP 3 882 551 A1**
(43) Date of publication of application: **22.09.2021**
(21) Application number: 19884345.0
(22) Date of filing: 12.11.2019
(51) Int. Cl.: F28D 9/02, F28D 20/02, F28F 3/04, F28F 3/08, F28F 3/10

(54) **HEAT EXCHANGER**

(30) Priority: 13.11.2018 JP 2018213273
(71) Applicant: NOK Corporation, Minato-ku Tokyo 105-8585 (JP)
(72) Inventor: KAJIYA, Atsushi, Kanagawa 2510042 (JP); MINOSHIMA, Kenji, Kanagawa 2510042 (JP); MAMIYA, Shoichi, Kanagawa 2510042 (JP); ONISHI, Shinji, Kanagawa 2510042 (JP)
(74) Representative: Global IP Europe Patentanwaltskanzlei
(86) International application number: PCT/JP2019/044219
(87) International publication number: WO 2020/100847

(57) **Abstract**

It is an object of the present invention to improve heat exchange efficiency. A heat exchanger (10) includes a heating fluid flow path (17) through which a heating fluid flows, a heated fluid flow path (18) through which a heated fluid flows, a heat radiation unit (12) that stacks a plurality of heat radiation plates (121, 122) in a thickness direction to thereby form a heat radiation flow path (123) communicating with the heating fluid flow path (17) between a plurality of heat radiation plates (121, 122), a heat receiving unit (13) provided stacked in the thickness direction of the heat radiation plates (121, 122) forming the heat radiation unit (12), that stacks a plurality of heat receiving plates (131, 132) in the thickness direction to form a heat receiving flow path (133) communicating with a heated fluid flow path (18) between the plurality of heat receiving plates (131, 132), a heat storage unit (14) formed of a space (141) between the heat radiation unit (12) and the heat receiving unit (13) and a heat storage material (142) filled inside the heat storage unit (14).

## Description

### Technical Field

The present invention relates to a heat exchanger.

### Background Art

Conventionally, heat exchangers for heating a fluid for hot water supply, heating or the like are known. The heat exchangers exchange heat between a fluid to be heated (hereinafter referred to as "heated fluid") and a fluid holding heat for heating the fluid to be heated (hereinafter referred to as "heating fluid") (for example, see Patent Literature 1).

### Document List

### Patent Literatures

Patent Literature 1: Japanese Patent Application Publication No. 2001-99590
Patent Literature 2: Japanese Patent Application Publication No. 2003-336974

### Summary of Invention

### Technical Problem

A conventional heat exchanger as described, for example, in Patent Literature 1, exchanges heat between the heating fluid and the heated fluid by transferring heat held by the heating fluid to the heated fluid via a heat conductive member such as a heat transfer plate, and so heat exchange efficiency depends on the heat conductive member and a heat capacity of the fluid. As a result, the conventional heat exchanger has low utilization efficiency of energy of the heat held by the heating fluid, that is, low heat exchange efficiency.

As described, for example, in Patent Literature 2, although a conventional heat exchanger provided with a heat storage unit between or around two fluids for which heat is exchanged is known, little attention has been paid to improvement of heat exchange efficiency.

The present invention has been implemented in view of the above problem, and it is an object of the present invention to provide a heat exchanger capable of improving heat exchange efficiency.

### Solution to Problem

In order to attain the above object, a heat exchanger according to the present invention is a heat exchanger that exchanges heat between a heating fluid and a heated fluid, including a heating fluid flow path through which the heating fluid flows, a heated fluid flow path through which the heated fluid flows, a heat radiation unit that stacks a plurality of heat radiation plates in a thickness direction to thereby form a heat radiation flow path communicating with the heating fluid flow path between the plurality of heat radiation plates, a heat receiving unit provided stacked in a thickness direction of the heat radiation plates forming the heat radiation unit, that stacks a plurality of heat receiving plates in the thickness direction to form a heat receiving flow path communicating with the heated fluid flow path between the plurality of heat receiving plates, a heat storage unit formed of a space between the heat radiation unit and the heat receiving unit and a heat storage material filled inside the heat storage unit.

In the heat exchanger according to one aspect of the present invention, the heat radiation plate includes a heat radiation surface provided with a plurality of recessed parts and protruding parts, and an outer peripheral part provided on an outer periphery of the heat radiation surface, in which the heat radiation unit is formed by brazing and joining the outer peripheral parts of the plurality of heat radiation plates.

In the heat exchanger according to one aspect of the present invention, the heat receiving plate includes a heat receiving surface provided with a plurality of recessed parts and protruding parts and an outer peripheral part provided on an outer periphery of the heat receiving surface, in which the heat receiving unit is formed by brazing and joining the outer peripheral parts of the plurality of heat receiving plates.

In the heat exchanger according to one aspect of the present invention, dimensions in height direction of the heat radiation unit and the heat receiving unit are smaller than a dimension in height direction of the heat storage unit.

The heat exchanger according to one aspect of the present invention is provided with a reinforcing plate that reinforces between the heat radiation plate and the heat receiving plate.

In the heat exchanger according to one aspect of the present invention, the heat storage material is a vanadium dioxide-based granular substance.

The heat exchanger according to one aspect of the present invention is provided with a heating unit that heats the heat storage unit.

The heat exchanger according to one aspect of the present invention is provided with a heat insulation unit that insulates the heat storage unit from outside.

In the heat exchanger according to one aspect of the present invention, the heat radiation unit, the heat receiving unit, the heat storage unit and the heat storage material form a heat exchange unit, and the heat exchanger includes a plurality of the heat exchange units.

### Effects of Invention

According to the present invention, it is possible to improve heat exchange efficiency.

### Brief Description of Drawings

[Fig. 1] A schematic view for illustrating a schematic configuration of a heat exchanger according to a first embodiment of the present invention.
[Fig. 2] A perspective view of the heat exchanger shown in Fig. 1.
[Fig. 3] An A-A cross-sectional view for illustrating a schematic configuration of the heat exchanger shown in Fig. 1.
[Fig. 4] A B-B cross-sectional view for illustrating a schematic configuration of the heat exchanger shown in Fig. 1.
[Fig. 5] A schematic view for illustrating a schematic configuration of the heating unit of the heat exchanger shown in Fig. 1.
[Fig. 6] A developed view for illustrating a schematic configuration of the heating unit shown in Fig. 5.
[Fig. 7] A schematic view for illustrating a schematic configuration of the heat insulation unit of the heat exchanger shown in Fig. 1.
[Fig. 8] A developed view for illustrating a schematic configuration of the heat insulation unit shown in Fig. 7.
[Fig. 9] An A-A cross-sectional view for illustrating a schematic configuration of a heat exchanger according to a second embodiment of the present invention.
[Fig. 10] A B-B cross-sectional view of the heat exchanger shown in Fig. 9.
[Fig. 11] A functional block diagram for illustrating a schematic configuration of a heat management system provided with the heat exchanger shown in Fig. 1 according to the embodiment of the present invention.
[Fig. 12] An A-A cross-sectional view for illustrating a schematic configuration of a modification of the heat exchanger shown in Fig. 1.

### Description of Embodiments

Hereinafter, a heat exchanger according to an embodiment of the present invention will be described with reference to the accompanying drawings. Regarding the heat exchanger according to the present embodiment, a heat exchanger that exchanges heat between a heating fluid such as a heat medium and a heated fluid such as water or coolant in a heat exchange system for hot water supply or heating will be described.

### [First Embodiment]

First, a heat exchanger according to a first embodiment of the present invention will be described.

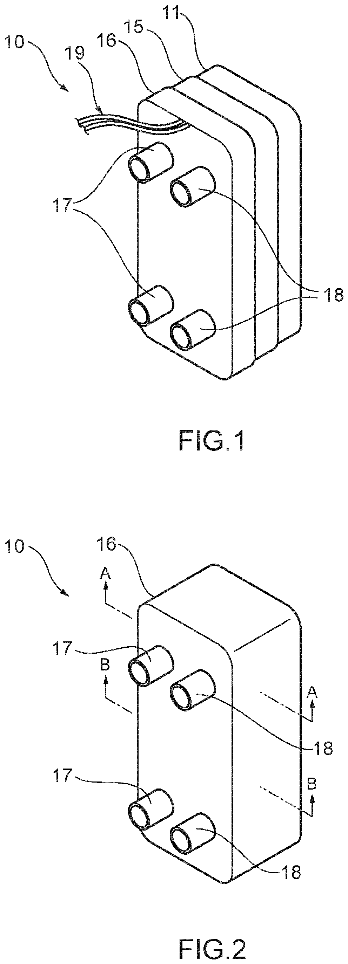

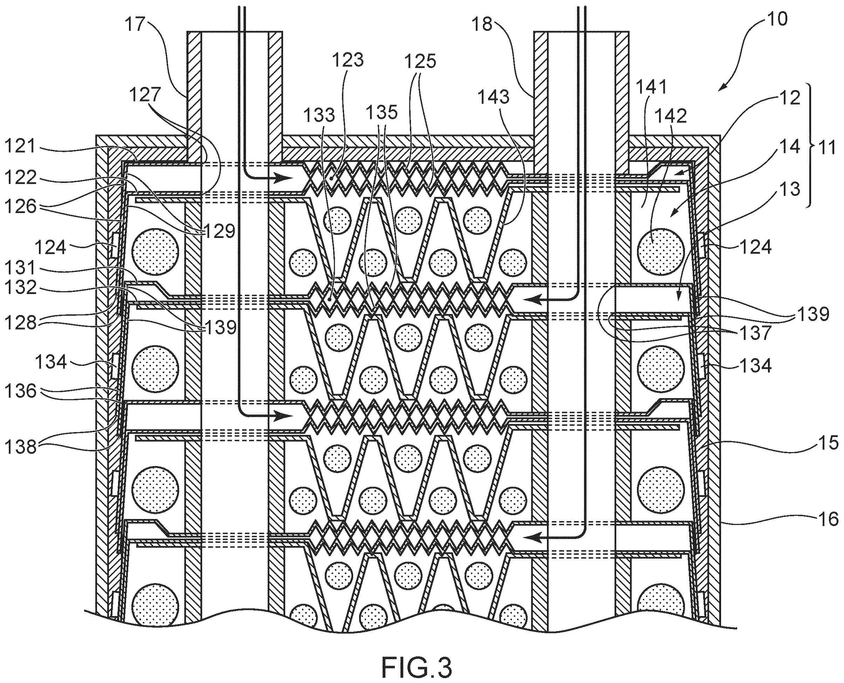

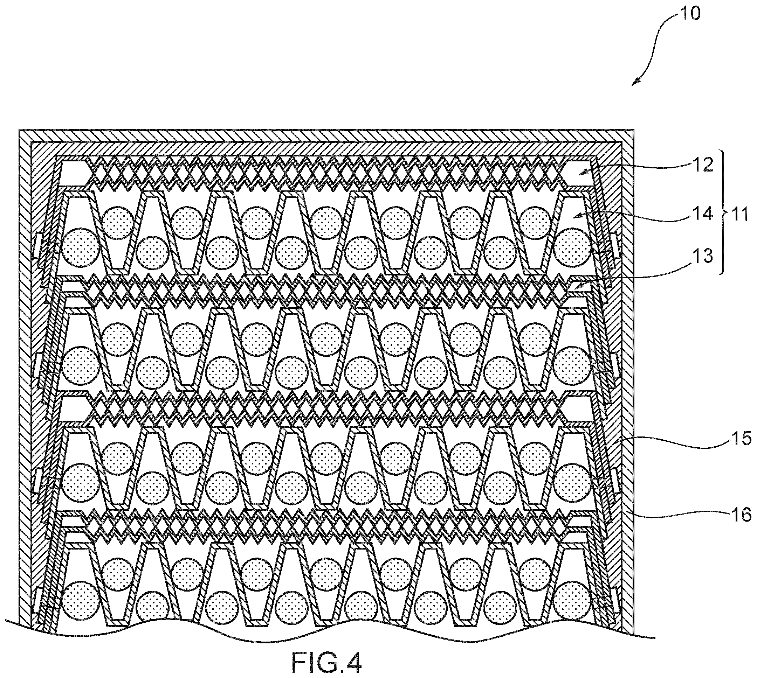

Fig. 1 is a schematic view for illustrating a schematic configuration of a heat exchanger 10 according to a first embodiment of the present invention. Fig. 2 is a perspective view of the heat exchanger 10. Fig. 3 is an A-A cross-sectional view for illustrating a schematic configuration of the heat exchanger 10. Fig. 4 is a B-B cross-sectional view for illustrating a schematic configuration of the heat exchanger 10. In Fig. 4, some of reference numerals shown in Fig. 3 are omitted. In the present embodiment, a longitudinal direction of the heat exchanger 10 shown in Fig. 1 and Fig. 2 is referred to as a "longitudinal direction" of the heat exchanger 10 and a short-length direction is referred to as a "transverse direction" of the heat exchanger 10. In the present embodiment, a direction orthogonal to both the longitudinal direction and the transverse direction of the heat exchanger 10 is referred to as a "height direction" or "thickness direction" of the heat exchanger 10.

The heat exchanger 10 according to the present embodiment exchanges heat between a heating fluid and a heated fluid. As shown in Fig. 1 to Fig. 4, the heat exchanger 10 is provided with a heating fluid flow path 17 through which the heating fluid flows and a heated fluid flow path 18 through which the heated fluid flows. Furthermore, as shown in Fig. 3 and Fig. 4, the heat exchanger 10 is provided with a heat radiation unit 12 that stacks a plurality of heat radiation plates 121 and 122 in a thickness direction to thereby form a heat radiation flow path 123 communicating with the heating fluid flow path 17 between the plurality of heat radiation plates 121 and 122. The heat exchanger 10 is further provided with a heat receiving unit 13 provided stacked in a thickness direction of the heat radiation plates 121 and 122 forming the heat radiation unit 12, that stacks a plurality of heat receiving plates 131 and 132 in the thickness direction to form a heat receiving flow path 133 communicating with the heated fluid flow path 18 between the plurality of heat receiving plates 131 and 132. The heat exchanger 10 is further provided with a heat storage unit 14 formed of a space 141 between the heat radiation unit 12 and the heat receiving unit 13, and a heat storage material 142 filled inside the heat storage unit 14. Hereinafter, a structure and operation of the heat exchanger 10 will be described more specifically.

As shown in Fig. 1 and Fig. 2, the heat exchanger 10 is provided with a heat exchange unit 11, a heating unit 15, a heat insulation unit 16, the heating fluid flow path 17, and the heated fluid flow path 18. As shown in Fig. 3 and Fig. 4, the heat exchange unit 11 is provided with the heat radiation unit 12, the heat receiving unit 13, and the heat storage unit 14 in the heat exchanger 10.

The heating unit 15 heats the heat storage unit 14 from outside, and is an electric heater, for example. The heating unit 15 is provided so as to cover the heat exchange unit 11 provided with the heat radiation unit 12, the heat receiving unit 13, and the heat storage unit 14 from outside. The heat insulation unit 16 is provided so as to cover the heat exchange unit 11 and the heating unit 15 from outside. The heat insulation unit 16 insulates the heat exchange unit 11 including the heat storage unit 14 from outside the heat exchanger 10. Detailed configurations of the heating unit 15 and the heat insulation unit 16 will be described later.

Thereafter, the configuration of the heat exchange unit 11 will be described. As shown in Fig. 3 and Fig. 4, the heat exchange unit 11 is provided with the heat radiation unit 12 that radiates heat held by the heating fluid, the heat receiving unit 13 that causes the heated fluid to receive the heat radiated by the heat radiation unit 12, and the heat storage unit 14 provided between the heat radiation unit 12 and the heat receiving unit 13, that stores the heat radiated from the heat radiation unit 12. The heat exchange unit 11 is provided with one or a plurality of sets of the heat radiation unit 12, heat receiving unit 13, and heat storage unit 14 for one heat exchanger 10.

The heat radiation unit 12 superimposes (stacks) the plurality of heat radiation plates 121 and 122 in the thickness direction as described above to thereby form the heat radiation flow path 123 between the heat radiation plates 121 and 122. The heat receiving unit 13 superimposes (stacks) the plurality of heat receiving plates 131 and 132 in the thickness direction as described above to thereby form the heat receiving flow path 133 between the heat receiving plates 131 and 132.

The heat radiation plates 121 and 122 include heat radiation surfaces 125 with a plurality of protruding parts and recessed parts formed in continuous waveforms in a cross-sectional view on a plate-shaped member. The concavo-convex shape in a plan view of the heat radiation surfaces 125 has a shape appropriate for heat transfer, for example, a herringbone shape or corrugate shape. The heat radiation plates 121 and 122 include outer peripheral parts 126 folded in the thickness direction of the plate-shaped member, that is, in the height direction of the heat exchanger 100 at both end portions of the plate-shaped member located on an outer periphery of the heat radiation surfaces 125. A sealing member 124 seals a hole (not shown) provided on the outer peripheral part 126 to enclose the heat storage material 142 of the granular substance in the space 141. The heat radiation plates 121 and 122 include openings 127 to allow the heating fluid flow path 17 to communicate with the heat radiation flow path 123 between the heat radiation surfaces 125 and the outer peripheral parts 126. The heat radiation plates 121 and 122 include distal end portions 128 at distal ends of the outer peripheral parts 126. The heat radiation plates 121 and 122 also include root parts 129 in the vicinity of the folded parts from the heat radiation surfaces 125 in the outer peripheral parts 126.

The heat receiving plates 131 and 132 have shapes corresponding to the heat radiation plates 121 and 122. That is, the heat receiving plates 131 and 132 include heat receiving surfaces 135 formed in waveforms in a cross-sectional view where a plurality of protruding parts and recessed parts are continuously arranged on a plate-shaped member. The concavo-convex shape of the heat receiving surface 135 such as a herringbone shape or corrugate shape in a plan view is suitable for heat transfer. The heat receiving plates 131 and 132 include outer peripheral parts 136 folded in the thickness direction of the plate-shaped member, that is, the height direction of the heat exchanger 100 at both end portions of the plate-shaped member located on the outer peripheral part of the heat receiving surfaces 135. A sealing member 134 seals a hole (not shown) provided in the outer peripheral parts 126 and 136 to enclose the heat storage material 142 of granular substance in the space 141. The heat receiving plates 131 and 132 include openings 137 to allow the heated fluid flow path 18 to communicate with the heat receiving flow path 133 between the heat receiving surface 135 and the outer peripheral part 136. The heat receiving plates 131 and 132 include distal end portions 138 at distal ends of the outer peripheral parts 136. The heat receiving plates 131 and 132 include root parts 139 in the vicinity of the folded parts from the heat receiving surface 135 in the outer peripheral parts 136.

The heat radiation plates 121 and 122, and the heat receiving plates 131 and 132 are constructed of plate-shaped members made of a raw material such as stainless steel (SUS316 or SUS304) having high thermal conductivity and corrosion-resistant to the heating fluid so as to efficiently radiate heat held by the heating fluid. The shapes of the heat radiation surfaces 125, the heat receiving surfaces 135, the outer peripheral parts 126 and 136 and the openings 127 and 137 or the like are formed by applying press work, punching or the like to such a plate-shaped members in the heat radiation plates 121 and 122, and the heat receiving plates 131 and 132. Note that any material other than the aforementioned stainless steel may be used for the heat radiation plates 121 and 122, and the heat receiving plates 131 and 132 as long as it satisfies requirements like high thermal conductivity, corrosion resistance or workability.

In the heat exchange unit 11, the heat radiation plates 121 and 122 forming the heat radiation unit 12 need to be joined together to prevent leakage of the heating fluid flowing from the heating fluid flow path 17 from the heat radiation flow path 123. In addition, the heat receiving plates 131 and 132 forming the heat receiving unit 13 need to be joined together to prevent leakage of the heated fluid flowing from the heated fluid flow path 18 from the heat receiving flow path 133. More specifically, an inside surface (space 141 side of the heat storage unit 14) of the outer peripheral part 126 of the heat radiation plate 121 of the heat radiation unit 12 is joined to an outside surface of the outer peripheral part 126 of the heat radiation plate 122. Furthermore, the inside surface of the outer peripheral part 136 of the heat receiving plate 131 of the heat receiving unit 13 is joined to the outside surface of the outer peripheral part 136 of the heat receiving plate 132.

In the heat exchange unit 11, it is necessary to join the heat radiation plates 121 and 122 of the heat radiation unit 12 and the heat receiving plates 131 and 132 of the heat receiving unit 13 in order to form the heat storage unit 14 between the heat radiation unit 12 and the heat receiving unit 13. In the heat radiation unit 12, the distal end portion 128 of the outer peripheral part 126 is joined to the root part 139 of the outer peripheral part 136 of the heat receiving unit 13. In the heat exchange unit 11, the heat radiation plates 121 and 122, and the heat receiving plates 131 and 132 are joined together by brazing. That is, the heat exchange unit 11 is brazing plate type heat exchanger. By adopting a brazing plate type heat exchanger structure for the heat exchange unit 11, it is possible to reduce dimensions of the heat radiation surfaces 125 and the heat receiving surfaces 135 in the thickness direction, and thereby reduce the amounts of the heating fluid and the heated fluid to be stored in the heat exchange unit 11. By adopting the brazing plate type heat exchanger structure for the heat exchange unit 11, it is possible to improve heat exchange efficiency, reduce the size and weight and improve robustness compared to a multitubular heat exchanger.

The heat storage unit 14 is, as described above, provided with the space 141 provided between one set of the heat radiation unit 12 and the heat receiving unit 13, and the heat storage material 142 filled inside the space 141. The space 141 is provided between the heat radiation plate 122 forming the heat radiation unit 12 and located on a side facing the heat receiving unit 13, and the heat receiving plate 131 forming the heat receiving unit 13 and located on a side facing the heat radiation unit 12. That is, the space 141 of the heat storage unit 14 is provided between the heat radiation surfaces 125 and the heat receiving surfaces 135 that exchange heat between the heating fluid and the heated fluid in the heat exchanger 10. The heat storage material 142 of the heat storage unit 14 is preferably filled without space inside the space 141 including reverse sides of the heat radiation surfaces 125 and the heat receiving surfaces 135 so that the heat storage material 142 efficiently receives heat from the heat radiation unit 12 to allow the heat receiving unit 13 to receive the heat.

As the heat storage material 142, a heat storage material of a vanadium dioxide (VO₂)-based granular substance may be used. The vanadium dioxide-based heat storage material is transition metal compound ceramics, element-substituted strong correlation electronic transition metal compound. Since the heat storage material 142 is a vanadium dioxide-based material, it has such characteristics: the heat storage amount per volume being close to water, having high thermal conductivity, excellent thermal responsiveness, having a small volume change because it never changes to liquid phase and being always usable in solid phase, being repeatedly usable, holding temperature being selectable or the like. Since the heat storage material 142 is based on vanadium dioxide, it has the above characteristics and is therefore suitably enclosed inside the hermetically closed space 141. Furthermore, since the heat storage material 142 is a vanadium dioxide-based granular substance, it can be sealed inside the space 141 without space. After the space 141 of the heat storage unit 14 is formed by joining the heat radiation plates 121 and 122 forming the heat radiation unit 12 to the heat receiving plates 131 and 132 forming the heat receiving unit 13, the heat storage material 142 is enclosed inside the space 141 from the above hole. The heat storage material 142 is sealed inside the space 141, with the hole sealed using the sealing members 124 and 134. Note that any heat storage material other than the aforementioned vanadium dioxide-based heat storage material may be used for the heat storage material 142.

The heat storage unit 14 is provided inside the space 141 and is provided with a reinforcing plate 143 that reinforces between the heat radiation plate 122 forming the heat radiation unit 12 and the heat receiving plate 131 forming the heat receiving unit 13. The reinforcing plate 143 is provided inside the heat storage unit 14 where heat is transferred between the heat radiation unit 12 and the heat receiving unit 13. For this reason, the reinforcing plate 143 is constructed of a plate-shaped member made of a raw material that does not block heat transfer between the heat radiation unit 12 and the heat receiving unit 13, for example, stainless steel (SUS316 or SUS304) with high thermal conductivity and corrosion-resistant to the heating fluid as in the cases of the heat radiation plates 121 and 122, and the heat receiving plates 131 and 132. The reinforcing plate 143 is formed into a concavo-convex shape so as to support the heat radiation plate 122 and the heat receiving plate 131 in the space 141 of the heat storage unit 14 as shown, for example, in Fig. 3 and Fig. 4 by performing press work or the like on such a plate-shaped member. Note that in the heat exchanger 10, the shape of the reinforcing plate 143 is not limited to the aforementioned one. Moreover, the heat exchanger 10 may not include the reinforcing plate 143.

As shown in Fig. 3 and Fig. 4, dimensions in the height direction of the heat radiation unit 12 and the heat receiving unit 13 are smaller than the dimensions in the height direction of the space 141 of the heat storage unit 14. More specifically, the dimension in the height direction of the space 141 is approximately 10 times the dimensions in the height direction of the heat radiation unit 12 and the heat receiving unit 13. By making smaller the dimensions in the height direction of the heat radiation unit 12 and the heat receiving unit 13 than the dimension in the height direction of the heat storage unit 14, the heat exchanger 10 can reduce the amounts of the heating fluid and the heated fluid held in the heat exchange unit 11 and thereby improve heat exchange efficiency.

The heating fluid flow path 17 is a pipeline connected to a circulation circuit of the heating fluid (hereinafter also referred to as a "heating fluid circuit") (not shown) in the heat exchange system to circulate the heating fluid between the heat source of the heating fluid and the heat radiation flow path 123 of the heat radiation unit 12 such as a flow path of the cooling liquid in the cooling system of the external device. The heated fluid flow path 18 is a pipeline connected to a circulation circuit of the heated fluid (hereinafter also referred to as a "heated fluid circuit") (not shown) in the heat exchange system. The heated fluid flow path 18 is connected to a flow path to use the heated fluid such as an HVAC (heating, ventilation and air conditioning) unit at a hot water supply port or air conditioner. Since the heated fluid flow path 18 is connected to the hot water supply port or the HVAC unit, the heated fluid is circulated between a component (not shown) using the heated fluid and the heat receiving flow path 133 of the heat receiving unit 13 in the heat exchange system.

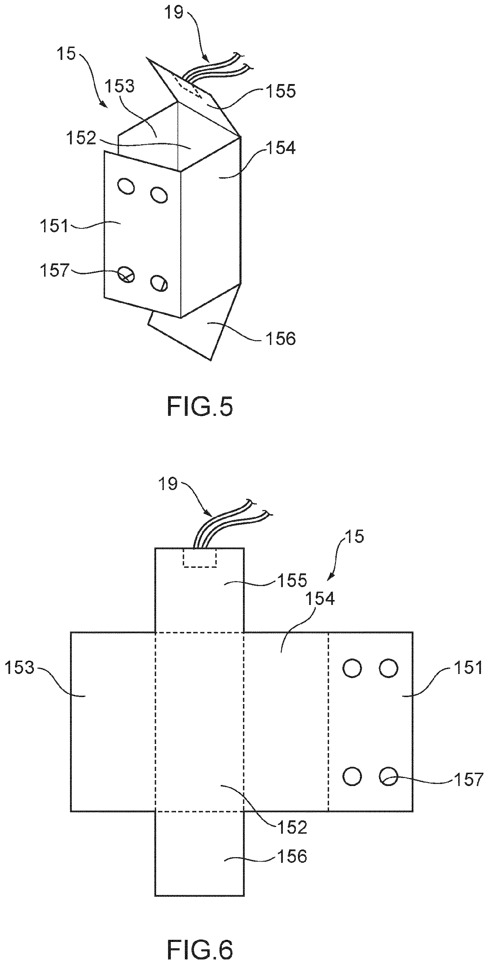

Fig. 5 is a schematic view for illustrating a schematic configuration of the heating unit 15 of the heat exchanger 10. Fig. 6 is a developed view for illustrating the schematic configuration of the heating unit 15. As shown in Fig. 5 and Fig. 6, the heating unit 15 has a shape of a substantially rectangular box opened up along, for example, an outline of the heat exchange unit 11 so as to cover the surface forming the heat exchange unit 11 from outside. The heating unit 15 preferably covers the surface forming the outline of the heat exchange unit 11 as much as possible so as to efficiently heat the heat exchange unit 11. More specifically, the heating unit 15 includes an undersurface part 151, a top surface part 152 and side face parts 153, 154, 155 and 156 so as to cover six surfaces: an undersurface (surface on which the heating fluid flow path 17 and the heated fluid flow path 18 are provided), a top surface (surface on a side opposite to the surface on which the heating fluid flow path 17 and the heated fluid flow path 18 are provided), longitudinal side faces, and lateral side faces of the heat exchange unit 11 of a substantially rectangular shape. In the heating unit 15, flow path openings 157 through which the heating fluid flow path 17 and the heated fluid flow path 18 are allowed to pass are provided on the undersurface part 151. An electric heater capable of heating the heat exchange unit 11 by electric power, for example, a silicone rubber heater can be used for the heating unit 15. The silicone rubber heater has high heat resistance of 200°C, has excellent durability and is easy to mold. The heating unit 15 is provided with a power supply cable 19 to receive power supply. Note that the heating unit 15 is not limited to the aforementioned shape of an open up box, but can have any shape, for example, a box-like shape with an opening provided with a lid as long as it can cover the surface forming the heat exchange unit 11.

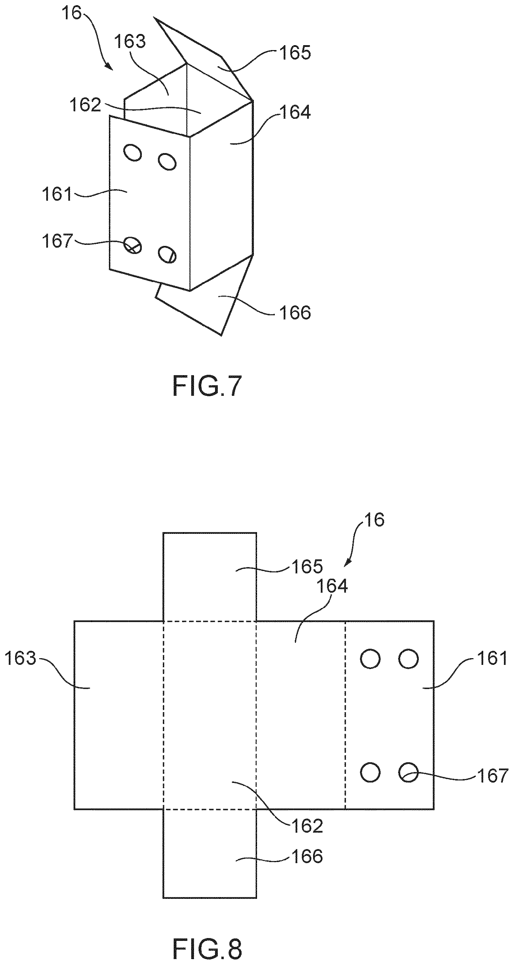

Fig. 7 is a schematic view for illustrating a schematic configuration of the heat insulation unit 16 of the heat exchanger 10. Fig. 8 is a developed view for illustrating a schematic configuration of the heat insulation unit 16. As shown in Fig. 7 and Fig. 8, the heat insulation unit 16 has a shape of a substantially rectangular box opened up, for example, along an outline of the heat exchange unit 11 so as to cover the surface forming the heat exchange unit 11 together with the heating unit 15 from outside. The heat insulation unit 16 preferably covers the surface forming the outline of the heat exchange unit 11 as much as possible so as to efficiently thermally insulate the heat exchange unit 11 from outside (efficiently retain heat stored in the heat storage unit 14). More specifically, the heat insulation unit 16 includes an undersurface part 161, a top surface part 162 and side face parts 163, 164, 165 and 166 so as to cover six surfaces of the substantially rectangular heat exchange unit 11: an undersurface, a top surface, longitudinal side faces, and lateral side faces. In the heat insulation unit 16, flow path openings 167 are provided on the undersurface part 161 so as to allow the heating fluid flow path 17 and the heated fluid flow path 18 to pass. A heat insulating material with a high heat insulation rate such as silica aerogel, polypropylene foam, glass wool or vacuum heat insulating material can be used for the heat insulation unit 16 so as to retain heat of the heat exchange unit 11. Note that the heat insulation unit 16, like the heating unit 15, is not limited to the aforementioned shape of an open up box as long as it can cover the surface forming the heat exchange unit 11, and, for example, a box-like shape with an opening provided with a lid may also be used.

Thereafter, operation of the heat exchanger 10 described so far will be described. As shown in Fig. 3, the heating fluid flows into the heat radiation flow path 123 of the heat radiation unit 12 from the heating fluid flow path 17 in the heat exchanger 10 and the heated fluid flows into the heat receiving flow path 133 of the heat receiving unit 13 from the heated fluid flow path 18.

The heat radiation surfaces 125 efficiently transfers heat held in the heating fluid flown into the heat radiation flow path 123 to the heat storage material 142 enclosed inside the space 141 of the heat storage unit 14 without space. The heat storage material 142 holds the received heat and heats the heat receiving unit 13 via the heat receiving surface 135. The heat receiving unit 13 causes the heated fluid flowing through the heat receiving flow path 133 to receive the heat received from the heat storage material 142 of the heat storage unit 14 to raise the temperature of the heated fluid.

The heating unit 15 heats the heat exchange unit 11 of the heat exchanger 10 from outside, and can thereby store heat in the heat storage material 142 of the heat storage unit 14. That is, when the heat exchanger 10 provided with the heating unit 15 is used as a heat exchanger for an air conditioner of an electric vehicle, the heat exchanger 10 can efficiently store heat using electric power during charging of a traveling battery. When used as a heat exchanger of a hot water supply apparatus, the heat exchanger 10 provided with the heating unit 15 can efficiently store heat in the heat storage unit 14 by receiving a power supply in a time zone at night or late at night when electric charges are inexpensive. The heat storage unit 14 can use the heat stored to heat the heated fluid. Note that the heating unit 15 can obtain the aforementioned effects by covering at least the heat storage unit 14.

The heat insulation unit 16 can keep warm the heat storage material 142 of the heat storage unit 14 by covering the heat exchange unit 11 of the heat exchanger 10 from outside. That is, when the heat exchanger 10 provided with the heat insulation unit 16 is used as a heat exchanger for an air conditioner of an electric vehicle, it is possible to keep the stored heat during or after charging of a traveling battery or when the electric vehicle is stopped, and use the heat as a heat source for heating operation immediately after the electric vehicle starts, for example. When the heat exchanger 10 provided with the heat insulation unit 16 is used, for example, as a heat exchanger of a hot water supply apparatus, the heat exchanger 10 can retain the stored heat and assist temperature rise of hot water supply during a cold period. Note that the heat insulation unit 16 can achieve the aforementioned effects by covering at least the heat storage unit 14.

### [Second Embodiment]

Next, a heat exchanger according to a second embodiment of the present invention will be described.

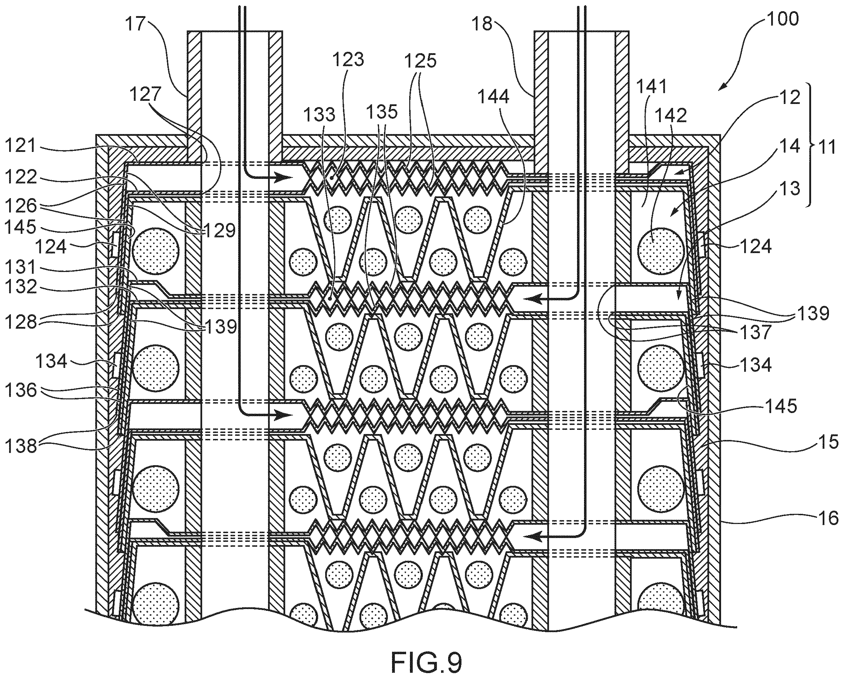

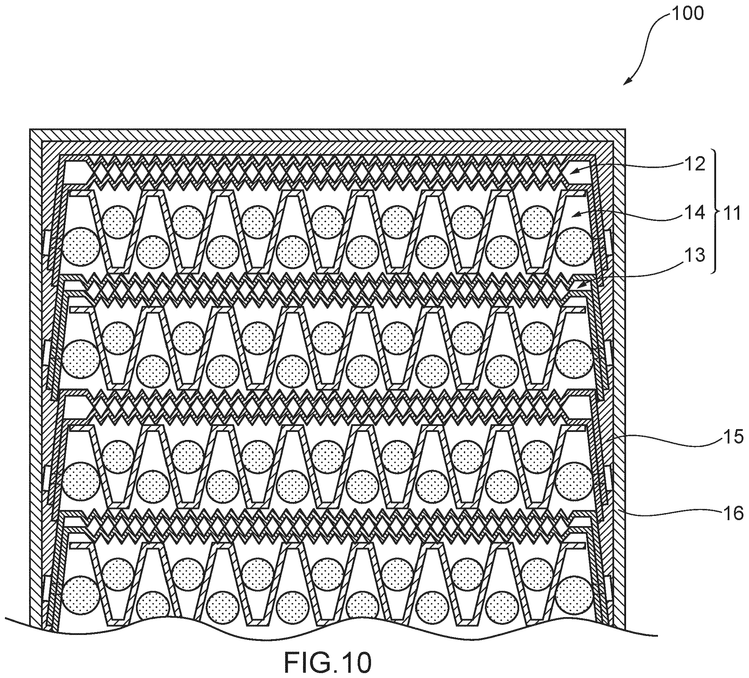

Fig. 9 is an A-A cross-sectional view for illustrating a schematic configuration of a heat exchanger 100 according to the second embodiment of the present invention. Fig. 10 is a B-B cross-sectional view of the heat exchanger 100. The heat exchanger 100 according to the present embodiment has the same outside shape as the heat exchanger 10 described above, but is different in an inner configuration of the heat exchange unit 11, which will be described later. For this reason, cross section indicated positions of the heat exchange unit 11 are common to the cross section indicated positions (A-A and B-B) of the heat exchanger 10 described above. Note that components of the heat exchanger 100 according to the present embodiment similar to the components of the heat exchanger 10 described above are assigned the same reference numerals and description will be omitted. Some of the reference numerals shown in Fig. 9 are omitted in Fig. 10.

As shown in Fig. 9 and Fig. 10, the shape of a reinforcing plate 144 of the heat storage unit 14 of the heat exchange unit 11 in the heat exchanger 100 is different from the shape of the reinforcing plate 143 of the heat storage unit 14 of the heat exchange unit 11 in the heat exchanger 10 described above. More specifically, as shown in Fig. 9 and Fig. 10, the reinforcing plate 144 includes outer peripheral parts 145 at both end portions of the concavo-convex shaped plate-shaped member so as to support the heat radiation plate 122 and the heat receiving plate 131 in the space 141 of the heat storage unit 14. Like the reinforcing plate 143 described above, the reinforcing plate 144 is constructed of a plate-shaped member made of a raw material that does not block heat transfer between the heat radiation unit 12 and the heat receiving unit 13, for example, a raw material such as stainless steel (SUS316 or SUS304) having high thermal conductivity and corrosion-resistant to the heating fluid.

The outer peripheral part 145 is folded in the thickness direction of the plate-shaped member, that is, in the height direction of the heat exchanger 100. The outer peripheral part 145 joins the heat radiation plates 121 and 122 of the heat radiation unit 12 and the heat receiving plates 131 and 132 of the heat receiving unit 13 together. More specifically, the outside surface of the outer peripheral part 145 is joined to the inside surface of the outer peripheral part 126 of the heat radiation plate 122 and the heat receiving plate 132 outside the space 141 in which the reinforcing plate 144 is provided. The inside surface of the outer peripheral part 145 is joined to the outside surfaces of the root part 129 of the heat radiation plate 121 and the root part 139 of the heat receiving plate 131 in the lower parts in Fig. 9 and Fig. 10 of the space in which the reinforcing plate 144 is provided. In the heat exchanger 100, the heat radiation unit 12, the heat receiving unit 13 and the heat storage unit 14 of the heat exchange unit 11 are joined using brazing similar to the brazing used to join the heat radiation unit 12 and the heat receiving unit 13 of the heat exchange unit 11 in the heat exchanger 10 described above.

As described above, since the shape of the reinforcing plate 144 in the heat storage unit 14 of the heat exchange unit 11 is different, the heat exchanger 100 can increase the number of locations at which the reinforcing plate 144 forming the heat storage unit 14 is joined to the heat receiving plates 131 and 132 forming the heat radiation plates 121 and 122 of the heat radiation unit 12 and the heat receiving unit 13 and the area, and can thereby provide a more robust structure.

### [Example of Mounting of Heat Exchanger on Heat Management System]

Next, an example of mounting of the above heat exchanger on a heat management system will be described.

In the following description, the heat management system performs indoor heat management inside a vehicle, a building or the like. In the following description, the heat management system will be described by taking as an example, an air conditioner mounted on an electric vehicle to perform air conditioning in a vehicle room of the electric vehicle as a predetermined space to be a target for heat management.

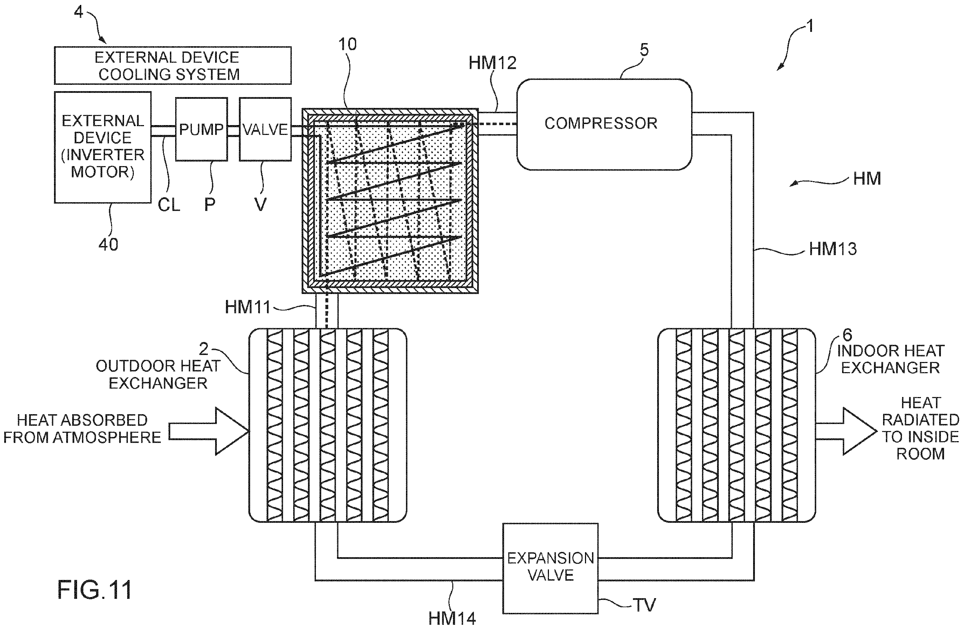

Fig. 11 is a functional block diagram for illustrating a schematic configuration of the heat management system provided with the heat exchanger. A heat management system 1 is an example of a heat pump type heating system using air heat outside the room as a heat source to raise the temperature in the vehicle room.

As shown in Fig. 11, the heat management system 1 is provided with an outdoor heat exchanger 2 that exchanges heat between a heat medium and outdoor air, a compressor 5 that compresses the heat medium heat-exchanged by the outdoor heat exchanger 2, an indoor heat exchanger 6 that exchanges heat between the heat medium compressed by the compressor 5 and indoor air. The heat exchanger 10 is the heat exchanger described in the above embodiment and exchanges heat between the heat generated by an external device 40 provided between the outdoor heat exchanger 2 and the indoor heat exchanger 6 and the heat medium. Hereinafter, a structure and operation of the heat management system 1 will be described more specifically.

In the heat management system 1, a heat medium circuit HM that can circulate the heat medium is formed between the outdoor heat exchanger 2, the heat exchanger 10, the compressor 5 and the indoor heat exchanger 6. For the heat medium, a medium similar to one generally called "coolant" in an ordinary air conditioner can be used. The heat medium circuit HM is constructed of flow paths HM 11 to HM 14. The flow path HM 11 connects between the outdoor heat exchanger 2 and the heat exchanger 10. The flow path HM 12 connects between the heat exchanger 10 and the compressor 5. The flow path HM 13 connects between the compressor 5 and the indoor heat exchanger 6. The flow path HM 14 connects between the indoor heat exchanger 6 and the outdoor heat exchanger 2. In the heat management system 1, the outdoor heat exchanger 2, the heat exchanger 10, the compressor 5, and the indoor heat exchanger 6 are connected in order via the heat medium circuit HM to thereby form a heat pump type refrigeration circuit.

Examples of the external device 40 include various heat sources provided outside the heat management system 1 such as a power motor of an electric vehicle and an inverter used to control a motor. A cooling liquid is generally used to cool a motor of an electric vehicle or an inverter. Thus, the external device 40 is built in the external device cooling system 4 provided with a cooling liquid circuit CL that can circulate a cooling liquid such as LLC (long life coolant) for cooling the external device 40 between the external device 40 and the heat exchanger 10. The external device 40, a pump P for circulating the cooling liquid between the external device 40 and the heat exchanger 10 and a valve V for controlling a flow rate of the cooling liquid between the external device 40 and the heat exchanger 10 are connected to the cooling liquid circuit CL of the external device cooling system 4.

A heat medium expanded by an expansion valve TV flows into the outdoor heat exchanger 2 and the outdoor heat exchanger 2 exchanges heat between the heat medium and outdoor air. More specifically, the outdoor heat exchanger 2 in the heat management system 1 functions as an evaporator that absorbs heat from the outdoor air to the heat medium.

The heat exchanger 10 is connected to the cooling liquid circuit CL. More specifically, the heating fluid flow path 17 shown in Fig. 1 or the like is connected to the cooling liquid circuit CL. That is, the cooling liquid used in the external device cooling system 4 as the heating fluid flows through the heat exchanger 10. The heat exchanger 10 is provided in the flow path HM 12 between the outdoor heat exchanger 2 and the indoor heat exchanger 6 in the heat medium circuit HM. More specifically, the heated fluid flow path 18 in the heat exchanger 10 shown in Fig. 1 or the like is connected to the flow path HM 12. That is, the heat medium used in the heat medium circuit HM flows as the heated fluid in the heat exchanger 10.

As shown in Fig. 11, the compressor 5 is provided after the heat exchanger 10 and before the indoor heat exchanger 6 in the flow path of the heat medium of the heat management system 1. The compressor 5 uses electric power as a power source. The compressor 5 compresses the heat medium that has passed through the heat exchanger 10.

The indoor heat exchanger 6 is provided after the compressor 5 and before the expansion valve TV in the flow path of the heat medium of the heat management system 1. More specifically, the indoor heat exchanger 6 faces the room interior, which is a target for heat management of the heat management system 1 and functions as a condenser that radiates heat held by the heat medium to indoor air.

The expansion valve TV is provided in the heat medium circuit HM 14 connecting between the indoor heat exchanger 6 and the outdoor heat exchanger 2. The expansion valve TV decompresses and expands the heat medium that has passed through the indoor heat exchanger 6 in a state in which the heat medium can be easily evaporated and secures an optimum flow rate inside the evaporator.

Next, operation of the heat management system 1, the structure of which has been described above, will be described.

The outdoor heat exchanger 2 raises the temperature of the heat medium caused to pass through the outdoor heat exchanger 2 by the liquid heat medium depriving the outdoor air of heat. The heat medium that has passed through the outdoor heat exchanger 2 is changed from liquid to gas.

The heat exchanger 10 receives waste heat from the external device 40 via the cooling liquid of the external device cooling system 4. The heat exchanger 10 causes the heat medium to receive the waste heat from the external device 40 and thereby further raises the temperature of the heat medium. The heat exchanger 10 causes the heat storage unit 14 provided between the heat radiation unit 12 and the heat receiving unit 13 to hold the heat from the cooling liquid and then delivers the heat to the heat medium. That is, the heat exchanger 10 stores the heat generated by the external device 40 and exchanges the heat with the heat medium.

The compressor 5 compresses the heat medium, the temperature of which has been raised by the outdoor heat exchanger 2 and the heat exchanger 10 and further raises the temperature of the heat medium.

The indoor heat exchanger 6 condenses the heat medium, the temperature of which has been raised by the compressor 5, radiates heat held by the heat medium to indoor air and raises the temperature of the indoor air. The heat medium heat-radiated in the heat management system 1 repeats a cycle of being liquefied, expanded by the expansion valve TV and entering the outdoor heat exchanger 2.

As described above, the heat exchanger 10 mounted on the heat management system 1 receives heat from the external device 40 from the cooling liquid, and can thereby raise the temperature of the heat medium. That is, since the heat storage unit 14 is provided between the heat radiation unit 12 and the heat receiving unit 13, the heat management system 1 mounted with the heat exchanger 10 can hold heat generated by the external device 40 for a predetermined time and use the heat to raise the temperature of the heat medium.

Therefore, according to the heat management system 1 mounted with the heat exchanger 10, even when the temperature of the heat medium cannot be raised depending on the outdoor heat exchanger 2, for example, when the outside air temperature is -10°C or below, it is possible to raise the temperature in the vehicle room using the heat pump scheme with low energy consumption.

According to the heat management system 1, the heat storage unit 14 holds heat generated from the external device 40 such as a traveling motor, an inverter or a traveling battery during traveling of, for example, an electric vehicle and uses the heat to raise the temperature of the heat medium at startup, and can thereby speed up temperature rise of the heat medium immediately after the startup.

The heat management system 1 mounted with the heat exchanger 10 can thereby reduce the amount of work of the compressor 5 used to raise the temperature of the heat medium compared to a general heat pump type air conditioner. Therefore, according to the heat management system 1, it is possible to reduce energy consumption used for heat management.

Although the embodiments of the present invention have been described so far, the present invention is not limited to the heat exchangers according to the above embodiments of the present invention, but includes all aspects included in the concept and claims of the present invention. The respective components may be selectively combined as appropriate so that at least some of the aforementioned problems or effects may be solved or exerted. For example, shapes, materials, arrangements, sizes or the like of the respective components in the above embodiments can be changed as appropriate according to specific usage of the present invention.

For example, in the embodiments described so far, uses of the heat exchanger are not limited to the aforementioned hot water supply or heating as long as it exchanges heat between the heated fluid and the heating fluid.

According to the above embodiments, the heat exchanger 10 is provided with the heat storage unit 14 between the heat radiation unit 12 and the heat receiving unit 13 in the thickness direction, but the present invention is not limited to this.

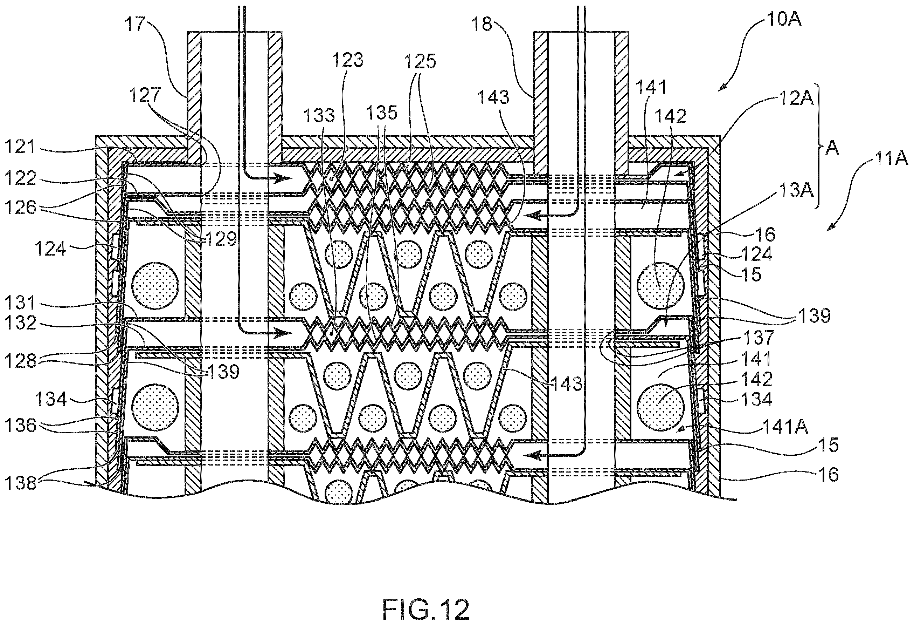

Fig. 12 is an A-A cross-sectional view for illustrating a schematic configuration of a heat exchanger 10A as a modification. For example, unlike the heat exchange unit 11 described above, in a heat exchange unit 11A of the heat exchanger 10A, a heat radiation unit 12A and a heat receiving unit 13A may be disposed without a heat storage unit 14A in between. That is, in the heat exchange unit 11A, the heat radiation unit 12A and the heat receiving unit 13A are stacked adjacent to each other in the thickness direction. As shown in Fig. 12, the heat radiation units 12A and the heat receiving units 13A may be disposed partially adjacent to each other or all the heat radiation unit 12A and heat receiving unit 13A in the heat exchange unit 11A may be disposed adjacent to each other. The heat exchanger 10A provided with the heat exchange unit 11A configured in that way can improve heat exchange efficiency like the heat exchanger 10 described above.

### List of Reference Signs

- 1: heat management system,
- 2: outdoor heat exchanger,
- 4: external device cooling system,
- 5: compressor,
- 6: indoor heat exchanger,
- 7: control unit,
- 10,: 10A heat exchanger,
- 11: heat exchange unit,
- 12: heat radiation unit,
- 13: heat receiving unit,
- 14: heat storage unit,
- 15: heating unit,
- 16: heat insulation unit,
- 17: heating fluid flow path,
- 18: heated fluid flow path,
- 19: power supply cable,
- 40: external device,
- 100: heat exchanger,
- 121: heat radiation plate,
- 122: heat radiation plate,
- 123: heat radiation flow path,
- 124: sealing member,
- 125: heat radiation surface,
- 126: outer peripheral part,
- 127: opening,
- 128: distal end portion,
- 129: root part,
- 131: heat receiving plate,
- 132: heat receiving plate,
- 133: heat receiving flow path,
- 134: sealing member,
- 135: heat receiving surface,
- 136: outer peripheral part,
- 137: opening,
- 138: distal end portion,
- 139: root part,
- 141: space,
- 142: heat storage material,
- 143, 144: reinforcing plate,
- 145: outer peripheral part,
- 151: undersurface part,
- 152: top surface part,
- 153, 154, 155, 156: side face part,
- 157: flow path opening,
- 161: undersurface part,
- 162: top surface part,
- 163, 164, 165, 166: side face part,
- 167: flow path opening

## Claims

1. A heat exchanger that exchanges heat between a heating fluid and a heated fluid, comprising:
a heating fluid flow path through which the heating fluid flows;
a heated fluid flow path through which the heated fluid flows;
a heat radiation unit that stacks a plurality of heat radiation plates in a thickness direction to thereby form a heat radiation flow path communicating with the heating fluid flow path between the plurality of heat radiation plates;
a heat receiving unit provided stacked in a thickness direction of the heat radiation plates forming the heat radiation unit, that stacks a plurality of heat receiving plates in the thickness direction to form a heat receiving flow path communicating with the heated fluid flow path between the plurality of heat receiving plates;
a heat storage unit formed of a space between the heat radiation unit and the heat receiving unit; and
a heat storage material filled inside the heat storage unit.

2. The heat exchanger according to claim 1, wherein the heat radiation plate comprises:
a heat radiation surface provided with a plurality of recessed parts and protruding parts; and
an outer peripheral part provided on an outer periphery of the heat radiation surface, and
the heat radiation unit is formed by brazing and joining the outer peripheral parts of the plurality of heat radiation plates.

3. The heat exchanger according to claim 1 or 2, wherein the heat receiving plate comprises:
a heat receiving surface provided with a plurality of recessed parts and protruding parts; and
an outer peripheral part provided on an outer periphery of the heat receiving surface, and
the heat receiving unit is formed by brazing and joining the outer peripheral parts of the plurality of heat receiving plates.

4. The heat exchanger according to any one of claims 1 to 3, wherein dimensions in height direction of the heat radiation unit and the heat receiving unit are smaller than a dimension in height direction of the heat storage unit.

5. The heat exchanger according to any one of claims 1 to 4, further comprising a reinforcing plate, provided in the heat storage unit, that reinforces between the heat radiation plate and the heat receiving plate.

6. The heat exchanger according to any one of claims 1 to 5, wherein the heat storage material is a vanadium dioxide-based granular substance.

7. The heat exchanger according to any one of claims 1 to 6, further comprising a heating unit that heats the heat storage unit.

8. The heat exchanger according to any one of claims 1 to 7, further comprising a heat insulation unit that insulates the heat storage unit from outside.

9. The heat exchanger according to any one of claims 1 to 8, wherein the heat radiation unit, the heat receiving unit, the heat storage unit and the heat storage material form a heat exchange unit, and the heat exchanger comprises a plurality of the heat exchange units.
